# EUROPEAN PATENT SPECIFICATION

(11) **EP 3 602 939 B1**
(45) Date of publication and mention of the grant of the patent: **13.08.2025**
(21) Application number: 18721134.7
(22) Date of filing: 23.03.2018
(51) Int. Cl.: H04L 5/00, H04W 72/12

(54) **SYSTEMS AND METHODS OF INDICATING A TRANSMITTER CONFIGURATION FOR A WIRELESS DEVICE**
SYSTEME UND VERFAHREN ZUR ANZEIGE EINER SENDERKONFIGURATION FÜR EINE DRAHTLOSE VORRICHTUNG
SYSTÈMES ET PROCÉDÉS D'INDICATION D'UNE CONFIGURATION D'ÉMETTEUR POUR UN DISPOSITIF SANS FIL

(30) Priority: 24.03.2017 US 201762476665 P
(43) Date of publication of application: 05.02.2020
(73) Proprietor: Telefonaktiebolaget LM Ericsson (PUBL), 164 83 Stockholm (SE)
(72) Inventor: FRENNE, Mattias, 754 43 Uppsala (SE); FAXÉR, Sebastian, 177 53 Järfälla (SE); GRANT, Stephen, Pleasanton, California 94566 (US); NILSSON, Andreas, 413 13 Göteborg (SE)
(74) Representative: Ericsson
(86) International application number: PCT/IB2018/051991
(87) International publication number: WO 2018/172994

(56) References cited:
- US-A1- 2016 119 947
- HUAWEI ET AL: "QCL indication of downlink control channel and beam management reference signals", vol. RAN WG1, no. Spokane, USA; 20170116 - 20170120, 16 January 2017 (2017-01-16), XP051207942, Retrieved from the Internet <URL:http://www.3gpp.org/ftp/Meetings_3GPP_SYNC/RAN1/Docs/> [retrieved on 20170116]
- ERICSSON: "On QCL for UL RS", vol. RAN WG1, no. Athens, Greece; 20170213 - 20170217, 12 February 2017 (2017-02-12), XP051209840, Retrieved from the Internet <URL:http://www.3gpp.org/ftp/Meetings_3GPP_SYNC/RAN1/Docs/> [retrieved on 20170212]
- ZTE ET AL: "QCL/QCB design for UL MIMO", vol. RAN WG1, no. Athens, Greece; 20170213 - 20170217, 12 February 2017 (2017-02-12), XP051208986, Retrieved from the Internet <URL:http://www.3gpp.org/ftp/Meetings_3GPP_SYNC/RAN1/Docs/> [retrieved on 20170212]
- ZTE ET AL: "UL beam management", vol. RAN WG1, no. Athens, Greece; 20170213 - 20170217, 12 February 2017 (2017-02-12), XP051208970, Retrieved from the Internet <URL:http://www.3gpp.org/ftp/Meetings_3GPP_SYNC/RAN1/Docs/> [retrieved on 20170212]
- ERICSSON: "Discussion on QCL", vol. RAN WG1, no. Lisbon, Portugal; 20161010 - 20161014, 9 October 2016 (2016-10-09), XP051149796, Retrieved from the Internet <URL:http://www.3gpp.org/ftp/Meetings_3GPP_SYNC/RAN1/Docs/> [retrieved on 20161009]

## Description

### TECHNICAL FIELD

The present disclosure relates generally to the field of communications, and in particular to indicating a transmitter configuration for a wireless device.

### BACKGROUND

In 5th Generation mobile networks or wireless systems (5G) or 5G New Radio (NR), spatial quasi co-location (QCL) has been introduced as a new concept. Two transmitted reference signals from a transmitter (e.g., base station) are said to be spatially QCL at a receiver (e.g., UE or terminal) if the receiving spatial characteristics of the two received reference signals are the same or similar. Spatial characteristics may be one or more of the primary angle of arrival, the receiving angular spread of the signal, the spatial correlation, or any other parameter or definition that captures spatial characteristics. The two reference signals are sometimes denoted equivalently as being transmitted/received from/by two different antenna ports. If two transmitting antenna ports of a gNB (e.g., base station) are spatially QCL at the UE, the UE may use the same receiving (RX) beamforming weights to receive both the first and second reference signals.

The use of spatial QCL is of particular importance when the UE uses analog beamforming, since the UE has to know where to direct the analog beam before receiving the signal. Hence, for 5G NR, it is possible to signal from gNB to UE that a certain previously transmitted channel state information reference signal (CSI-RS) resource or CSI-RS antenna port is spatially QCL with a physical downlink shared channel (PDSCH) transmission and the PDSCH's demodulation reference signal (DMRS) transmission. With this information, the UE may use the same analog beam for the PDSCH reception as it used in the reception of the previous CSI-RS resource or antenna port.

The spatial QCL framework may also be extended to hold for transmissions from the UE. In this case, the transmitted signal from the UE is spatially QCL with a previous reception of a signal received by the UE. If the UE makes this assumption for the transmission, it means that the UE is transmitting back a signal in an analog transmit (TX) beam which is the same or similar to the RX beam previously used to receive a signal. Hence, the first Reference Signal (RS) transmitted from the gNB is spatially QCL at the UE with a second RS transmitted from the UE back to the gNB. This is useful in case the gNB uses analog beamforming since the gNB then knows from which direction to expect a transmission from the UE and may therefore adjust its beam direction just before the actual reception.

In 5G NR, beam pair links (BPL) establishment between a base station (e.g., gNodeB or gNB), and user equipment (UE) has also been introduced as a new concept. A BPL is defined as a gNB transmit (TX) beam and a UE receive (RX) beam. Multiple BPLs may be established to provide diversity such as for PDCCH transmissions. In this case, a first set of PDCCH candidates is transmitted over a first BPL while a remaining second set of candidates is transmitted over a second BPL.

Hence, the UE will attempt to decode the first BPL with a first RX beam and decode the second BPL with a second RX beam. The use of the term "beam" may be seen as an abstraction of a receiver configuration of combining signals from multiple antenna elements. Knowledge of the RX beam to use prior to receiving a signal is crucial in implementations using an analog beamformer since this type of receiver may only receive in one beam direction or with one receiver configuration at a time.

A BPL may be updated using a measurement process. For example, the gNB may trigger the UE to measure on a set of different downlink (DL) TX beams and report which beam is preferred. In this case, a channel state information reference signal (CSI-RS) resource is transmitted on each DL TX beam and the UE reports a CSI-RS resource index (CRI) to indicate the preference. A BPL may then be updated by referring to the new beam as reported by the CRI feedback. Likewise, the RX beam for a BPL may be updated with a similar measurement procedure.

For uplink transmissions such as a physical uplink control channel (PUCCH) containing a hybrid automatic repeat request acknowledgement (HARQ-ACK) or channel state information (CSI) feedback, or physical uplink shared channel (PUSCH) transmissions, a straightforward solution is to indicate in the DL or uplink (UL) scheduling message which BPL to use for the corresponding uplink transmission.

One of the problems with existing solutions is that they suffer from an inability to instantaneously update a BPL. These solutions typically require several slots to complete a BPL update since they require the steps of detecting a trigger to initiate a measurement, performing the measurement, and sending the measurement report feedback. In some solutions, there is even an additional delay for indicating to a UE that a BPL has been updated based on a measurement report containing a CRI. Another problem with existing solutions is that a measurement report transmitted from a UE to a gNB containing a CRI may be lost in the uplink transmission. Further, the delay and possible loss of feedback of a preferred beam may cause problems for the uplink transmission if a BPL indication for an uplink transmission is used on a PDCCH. One reason is that the BPL may be updated during the time between a PDCCH reception and the associated uplink transmission. In this case, the UE will use the new TX beam after the BPL update and not the beam in the previous BPL that was assumed when scheduling the uplink transmission, which may cause confusion in some cases.

Another reason for losing a measurement report is that a UE and a gNB may have a different understanding of which UE TX beam to use for the uplink transmission. For instance, the gNB assumes the previous BPL (e.g., BPL from downlink signal) while the UE assumes the new BPL (e.g., updated BPL from subsequent downlink signal). This situation may lead to a degradation in performance or even loss of the uplink message, causing retransmissions or even triggering of beam failure procedures.

Accordingly, there is a need for improved techniques for determining a transmitter configuration for a wireless device. In addition, other desirable features and characteristics of the present disclosure will become apparent from the subsequent detailed description and embodiments, taken in conjunction with the accompanying figures and the foregoing technical field and background.

The Background section of this document is provided to place embodiments of the present disclosure in technological and operational context, to assist those of skill in the art in understanding their scope and utility. Unless explicitly identified as such, no statement herein is admitted to be prior art merely by its inclusion in the Background section.

Some background information relating to QCL can be found in various 3GPP submissions, including "QCL indication of downlink control channel and beam management reference signals" (3GPP R1-1700405) by Huawei et al., "On QCL for UL RS" (3GPP R1-1702693) by Ericsson, "QCL/QCB design for UL MIMO" (3GPP R1-1701820) by ZTE et al., and "UL beam management" (3GPP R1-1701804) by ZTE et al.

### SUMMARY

The following presents a simplified summary of the disclosure in order to provide a basic understanding to those of skill in the art. This summary is not an extensive overview of the disclosure and is not intended to identify key/critical elements of embodiments of the disclosure or to delineate the scope of the disclosure. The sole purpose of this summary is to present some concepts disclosed herein in a simplified form as a prelude to the more detailed description that is presented later.

Systems and methods of indicating a transmitter configuration for a wireless device are described herein. According to one aspect, a method performed by a wireless device in a wireless communications system in accordance with claim 1 is provided.

According to one aspect, a wireless device in accordance with claim 4 is provided.

According to one aspect, a computer program in accordance with claim 5 is provided.

### BRIEF DESCRIPTION OF THE DRAWINGS

The present disclosure will now be described more fully hereinafter with reference to the accompanying drawings, in which embodiments of the disclosure are shown. However, this disclosure should not be construed as limited to the embodiments set forth herein. Rather, these embodiments are provided so that this disclosure will be thorough and complete, and will fully convey the scope of the disclosure to those skilled in the art. Like numbers refer to like elements throughout.
**FIG. 1** illustrates one embodiment of a system for indicating a transmitter configuration for a wireless device in a wireless communication system in accordance with various aspects as described herein.
**FIG. 2** illustrates one embodiment of a wireless device in accordance with various aspects as described herein.
**FIGs. 3A-B** illustrate other embodiments of a wireless device in accordance with various aspects as described herein.
**FIG. 4** illustrates one embodiment of a method performed by a wireless device for indicating a transmitter configuration for the wireless device in a wireless communication system in accordance with various aspects as described herein.
**FIG. 5** illustrates another embodiment of a wireless device in accordance with various aspects as described herein.
**FIG. 6** illustrates one embodiment of a network node in accordance with various aspects as described herein.
**FIGs. 7A-B** illustrate other embodiments of a network node in accordance with various aspects as described herein.
**FIG. 8** illustrates one embodiment of a method performed by a network node for indicating a transmitter configuration for a wireless device in a wireless communication system in accordance with various aspects as described herein.

### DETAILED DESCRIPTION

For simplicity and illustrative purposes, the present disclosure is described by referring mainly to an exemplary embodiment thereof. In the following description, numerous specific details are set forth in order to provide a thorough understanding of the present disclosure. However, it will be readily apparent to one of ordinary skill in the art that the present disclosure may be practiced without limitation to these specific details. In this description, well known methods and structures have not been described in detail so as not to unnecessarily obscure the present disclosure.

This disclosure includes describing systems and methods for indicating a transmitter configuration for a wireless device. In embodiments described herein, a wireless device (e.g., UE) uses the same beam for transmitting an uplink response to a network node (e.g., base station) as the beam used by the wireless device to receive the downlink transmission from the network node that scheduled that uplink response. A same beam may mean that a transmission (e.g., PUCCH or PUSCH) by a wireless device is spatially QCL with a reception of a signal transmitted by a network node. Further, a same beam may mean that a transmission by a wireless device is spatially related to another transmission by the wireless device. In addition, some embodiments described herein are associated with a BPL index not being included in the downlink transmission (e.g., PDCCH) used to schedule an uplink transmission (e.g., PUCCH or PUSCH). For this first case, a wireless device uses a same beam for transmitting an uplink response (e.g., PUCCH, PUSCH) to a network node as the beam the wireless device used to receive the downlink transmission that schedules the uplink response. Hence, there is no explicit signaling between the wireless device and the network node to indicate which beam the wireless device should use for transmitting the uplink response.

Other embodiments described herein are associated with a BPL index being included in the downlink transmission (e.g., PDCCH) used to schedule the uplink response. For this second case, the beam used for a BPL when scheduling an uplink transmission should also be used for that uplink transmission, irrespective of whether that BPL has been updated or not since the downlink message that scheduled the uplink transmission was received. The uplink response may be a HARQ-ACK in response to either a downlink message (e.g.,PDSCH) or a PDCCH depending on specification or higher layer configuration. Additionally or alternatively, the uplink response may be a CSI feedback or PUSCH transmission based on a PDCCH. Accordingly, no explicit signaling is needed between the network node and the wireless device to indicate which beam the wireless device will use for transmitting an uplink response. Further, there is no ambiguity as to which beam the wireless device is to use for transmitting the scheduled uplink response. This applies even if the beams of the BPL are updated between the scheduling of the uplink response and the transmission of the uplink response (even if the update of the BPL fails, which may lead to a different understanding of the beams to use on the gNB and UE sides).

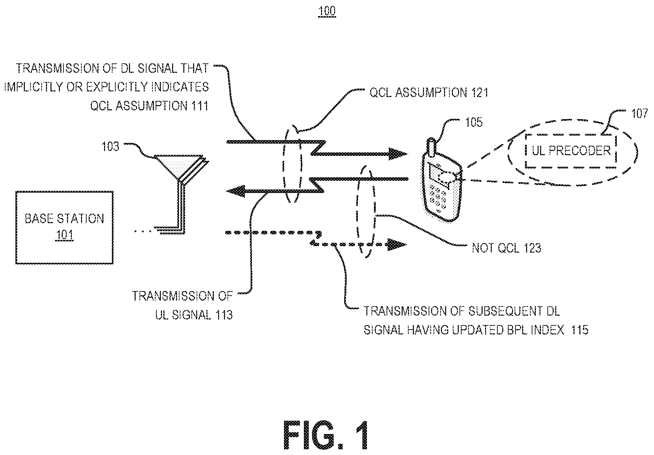

For example, **FIG. 1** illustrates one embodiment of a system **100** for indicating a transmitter configuration (e.g., uplink precoder) for a wireless device in accordance with various aspects as described herein. In **FIG. 1****,** the system **100** may include a network node **101** (e.g., base station) and a wireless device **105.** The network node **101** may include one or more antenna ports **103** (e.g., antenna array) that may transmit a downlink signal **111.** Also, the downlink signal **111** may explicitly or implicitly indicate a QCL assumption **121.** QCL may also be referred to as spatial QCL, reciprocal spatial QCL, spatial relation, or the like. Further, QCL may be associated with a transmission or reception of a signal that is in a same beam direction as a transmission or reception of another signal. In one example, the downlink signal **111** may implicitly indicate the QCL assumption **121.** In another example, the downlink signal **111** may explicitly indicate the QCL assumption **121** using an index that indicates a BPL. The network node **101** may obtain the index based on the QCL assumption **121** and may then insert the index into the downlink signal **111.** The network node **101** then transmits the downlink signal **111** that indicates the QCL assumption **121.** The downlink signal **111** schedules or triggers a transmission of an uplink signal **113** by the wireless device **105.** The downlink signal **111** may be on a PDCCH or a PDSCH. Also, the downlink signal may be a DMRS on either the PDCCH or the PDSCH.

In **FIG. 1****,** the wireless device **105** receives the downlink signal **111** that indicates the QCL assumption using a certain receiver configuration (e.g., receive beamforming weights of a spatial receive filter). The wireless device **105** may extract the index from the downlink signal **111** and may then obtain the QCL assumption **121** based on the index. The wireless device **105** may determine a transmitter configuration based on the QCL assumption **121.** For instance, the wireless device **105** may determine transmit beamforming weights of a spatial transmit filter (e.g., precoder) based on the receive beamforming weights of a spatial receive filter that enabled the reception of the downlink signal **111** associated with the QCL assumption **121.** The wireless device 105 then transmits the uplink signal **113** using the transmitter configuration based on the QCL assumption **121.** The wireless device **105** may continue to associate the BPL index with the uplink channel **113** irrespective of whether an updated BPL index is received on a subsequent downlink signal **115** by the wireless device **105.** Hence, the subsequent downlink signal **115** will not be QCL with the uplink signal **113,** as represented by reference **123.** Instead, the downlink signal **111** will continue to be QCL with the uplink signal **113** according to the QCL assumption **121.** In addition, the network node **101** receives the uplink signal **113.**

Additionally or alternatively, the network node **101** may be configured to support a wireless communication system (e.g., NR, LTE, LTE-NR, UMTS, GSM, or the like). Further, the network node **101** may be a base station (e.g., eNB), an access point, a wireless router, or the like. The network node **101** may serve wireless devices such as wireless device **105.** The wireless device **105** may be configured to support a wireless communication system (e.g., NR, LTE, LTE-NR, UMTS, GSM, or the like). The wireless device **105** may be a user equipment (UE), a mobile station (MS), a terminal, a cellular phone, a cellular handset, a personal digital assistant (PDA), a smartphone, a wireless phone, an organizer, a handheld computer, a desktop computer, a laptop computer, a tablet computer, a set-top box, a television, an appliance, a game device, a medical device, a display device, a metering device, or the like.

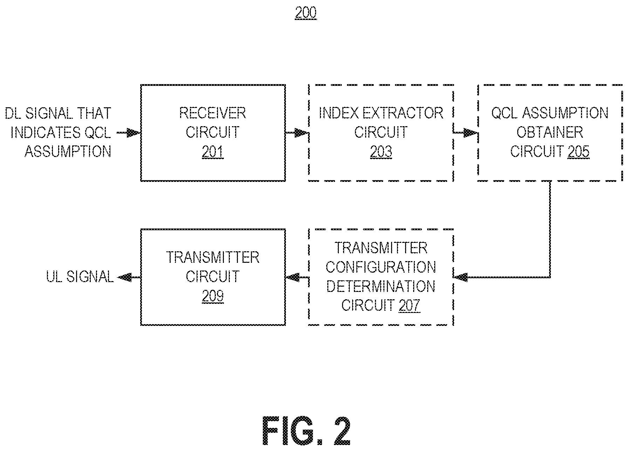

**FIG. 2** illustrates one embodiment of a wireless device **200** in accordance with various aspects as described herein. In **FIG. 2****,** the wireless device **200** may include a receiver circuit **201,** an index extractor circuit **203,** a QCL assumption obtainer circuit **205,** a transmitter configuration determination circuit **207,** and a transmitter circuit **209,** the like, or any combination thereof. The receiver circuit **201** may be configured to receive a downlink signal that indicates a QCL assumption. Further, the downlink signal may schedule or trigger a transmission of an uplink signal. The index extractor circuit **203** may be configured to extract an index from the downlink signal. The QCL assumption obtainer circuit **205** may be configured to obtain the QCL assumption based on the index. The transmitter configuration determination circuit **207** may be configured to determine a transmitter configuration based on the QCL assumption by, for instance, determining transmit beamforming weights based on receive beamforming weights that enabled the reception of the downlink signal associated with the QCL assumption. The transmitter circuit **209** may be configured to transmit the uplink signal using the transmitter configuration (e.g., transmit beamforming weights) based on the QCL assumption. The transmit beamforming weights may be used in an uplink precoder **211** of the transmitter circuit **209.** The uplink precoder **211,** using the transmit beamforming weights, may precode the uplink signal for transmission by the wireless device.

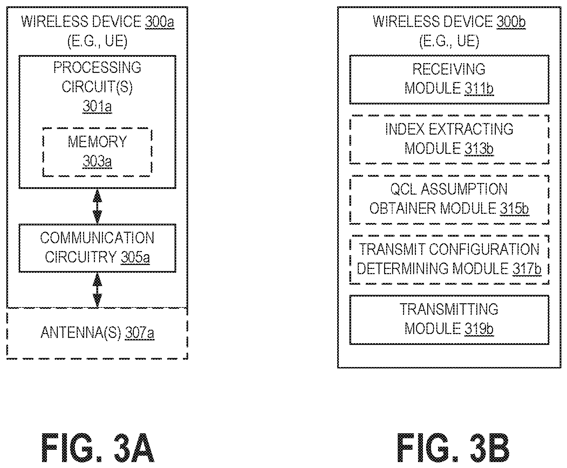

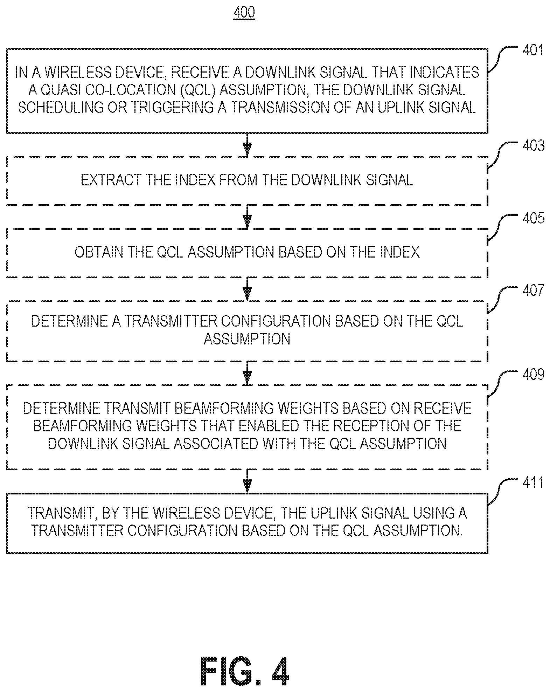

**FIGs. 3A-B** illustrate other embodiments of a wireless device **300a,b** in accordance with various aspects as described herein. In **FIG. 3A****,** the wireless device **300a** (e.g., UE) may include processing circuit(s) **301a,** radio frequency (RF) communications circuit(s) **305a,** antenna(s) **307a,** the like, or any combination thereof. The communication circuit(s) **305a** may be configured to transmit or receive information to or from one or more network nodes via any communication technology. This communication may occur using the one or more antennas **307a** that are either internal or external to the wireless device **300a.** The processing circuit(s) **301a** may be configured to perform processing as described herein (e.g., the method of **FIG. 4**) such as by executing program instructions stored in memory **303a.** The processing circuit(s) **301a** in this regard may implement certain functional means, units, or modules.

In **FIG. 3B****,** the wireless device **300b** may implement various functional means, units, or modules (e.g., via the processing circuit(s) **301a** in **FIG. 3A** or via software code). These functional means, units, or modules (e.g., for implementing the method of **FIG. 4**) may include a receiving unit or module **311b** for receiving a downlink signal that indicates a QCL assumption; an index extracting unit or module **313b** for extracting an index from the downlink signal; a QCL assumption obtainer unit or module **315b** for obtaining the QCL assumption based on the index; a transmitter configuration determining unit or module **317b** for determining a transmitter configuration based on the QCL assumption; and a transmitting unit or module **319b** for transmitting the uplink signal using the transmitter configuration based on the QCL assumption.

**FIG. 4** illustrates one embodiment of a method **400** performed by a wireless device for determining transmitter and receiver configurations for the wireless device in a wireless communication system in accordance with various aspects as described herein. The wireless device performing this method **400** may correspond to any of the wireless devices **105, 200, 300a-b , 500** described herein. In **FIG. 4****,** the method **400** may start, for instance, at block **401** where it may include receiving a downlink signal that indicates a QCL assumption. Further, the downlink signal may schedule or trigger a transmission of an uplink signal by the wireless device. At block **403,** the method **400** may include extracting the index from the downlink signal. At block **405,** the method **400** may include obtaining the QCL assumption based on the index. At block **407,** the method **400** may include determining a transmitter configuration based on the QCL assumption. For instance, at block **409,** the method **400** may include determining transmit beamforming weights of a spatial transmit filter based on receive beamforming weights that enabled the reception of the downlink signal associated with the QCL assumption. In addition, the wireless device may transmit another uplink signal using the transmitter configuration based on the QCL assumption, as represented by block **413.** The transmission of the other uplink signal is spatially related to the transmission of the uplink signal.

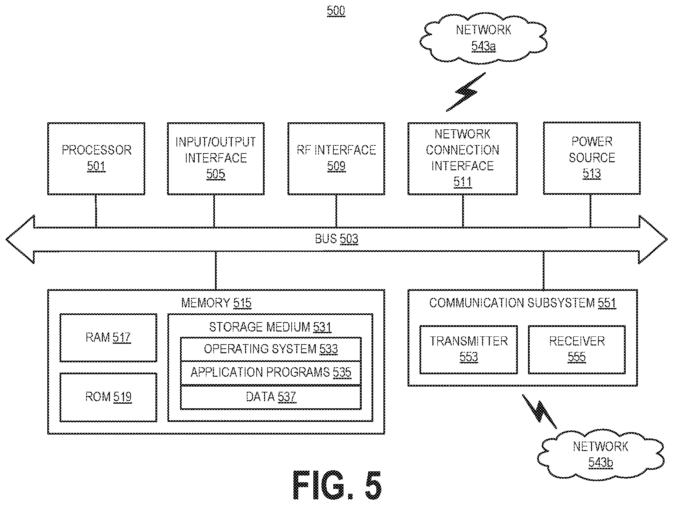

**FIG. 5** illustrates another embodiment of a wireless device in accordance with various aspects as described herein. In some instances, the wireless device **500** may be referred as a UE, a mobile station (MS), a terminal, a cellular phone, a cellular handset, a personal digital assistant (PDA), a smartphone, a wireless phone, an organizer, a handheld computer, a desktop computer, a laptop computer, a tablet computer, a set-top box, a television, an appliance, a game device, a medical device, a display device, a metering device, or some other like terminology. In other instances, the wireless device **500** may be a set of hardware components. In **FIG. 5****,** the wireless device **500** may be configured to include a processor **501** that is operatively coupled to an input/output interface **505,** a radio frequency (RF) interface **509,** a network connection interface **511,** a memory **515** including a random access memory (RAM) **517,** a read only memory (ROM) **519,** a storage medium **531** or the like, a communication subsystem **551,** a power source **513,** another component, or any combination thereof. The storage medium **531** may include an operating system **533,** an application program **535,** data **537,** or the like. Specific devices may utilize all of the components shown in **FIG. 5****,** or only a subset of the components, and levels of integration may vary from device to device. Further, specific devices may contain multiple instances of a component, such as multiple processors, memories, transceivers, transmitters, receivers, etc. For instance, a computing device may be configured to include a processor and a memory.

In **FIG. 5****,** the processor **501** may be configured to process computer instructions and data. The processor **501** may be configured as any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more storedprogram, general-purpose processors, such as a microprocessor or Digital Signal Processor (DSP), together with appropriate software; or any combination of the above. For example, the processor **501** may include two computer processors. In one definition, data is information in a form suitable for use by a computer. It is important to note that a person having ordinary skill in the art will recognize that the subject matter of this disclosure may be implemented using various operating systems or combinations of operating systems.

In the current embodiment, the input/output interface **505** may be configured to provide a communication interface to an input device, output device, or input and output device. The wireless device **500** may be configured to use an output device via the input/output interface **505.** A person of ordinary skill will recognize that an output device may use the same type of interface port as an input device. For example, a USB port may be used to provide input to and output from the wireless device **500.** The output device may be a speaker, a sound card, a video card, a display, a monitor, a printer, an actuator, an emitter, a smartcard, another output device, or any combination thereof. The wireless device **500** may be configured to use an input device via the input/output interface **505** to allow a user to capture information into the wireless device **500.** The input device may include a mouse, a trackball, a directional pad, a trackpad, a presence-sensitive input device, a display such as a presence-sensitive display, a scroll wheel, a digital camera, a digital video camera, a web camera, a microphone, a sensor, a smartcard, and the like. The presence-sensitive input device may include a digital camera, a digital video camera, a web camera, a microphone, a sensor, or the like to sense input from a user. The presence-sensitive input device may be combined with the display to form a presence-sensitive display. Further, the presence-sensitive input device may be coupled to the processor. The sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In **FIG. 5****,** the RF interface **509** may be configured to provide a communication interface to RF components such as a transmitter, a receiver, and an antenna. The network connection interface **511** may be configured to provide a communication interface to a network **543a.** The network **543a** may encompass wired and wireless communication networks such as a local-area network (LAN), a wide-area network (WAN), a computer network, a wireless network, a telecommunications network, another like network or any combination thereof. For example, the network **543a** may be a Wi-Fi network. The network connection interface **511** may be configured to include a receiver and a transmitter interface used to communicate with one or more other nodes over a communication network according to one or more communication protocols known in the art or that may be developed, such as Ethernet, TCP/IP, SONET, ATM, or the like. The network connection interface **511** may implement receiver and transmitter functionality appropriate to the communication network links (e.g., optical, electrical, and the like). The transmitter and receiver functions may share circuit components, software or firmware, or alternatively may be implemented separately.

In this embodiment, the RAM **517** may be configured to interface via the bus **503** to the processor **501** to provide storage or caching of data or computer instructions during the execution of software programs such as the operating system, application programs, and device drivers. In one example, the wireless device **500** may include at least one hundred and twentyeight megabytes (128 Mbytes) of RAM. The ROM **519** may be configured to provide computer instructions or data to the processor **501.** For example, the ROM **519** may be configured to be invariant low-level system code or data for basic system functions such as basic input and output (I/O), startup, or reception of keystrokes from a keyboard that are stored in a non-volatile memory. The storage medium **531** may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, flash drives. In one example, the storage medium **531** may be configured to include an operating system **533,** an application program **535** such as a web browser application, a widget or gadget engine or another application, and a data file **537.**

In **FIG. 5****,** the processor **501** may be configured to communicate with a network **543b** using the communication subsystem **551.** The network **543a** and the network **543b** may be the same network or networks or different network or networks. The communication subsystem **551** may be configured to include one or more transceivers used to communicate with the network **543b.** The one or more transceivers may be used to communicate with one or more remote transceivers of another wireless device such as a base station of a radio access network (RAN) according to one or more communication protocols known in the art or that may be developed, such as IEEE 802.xx, CDMA, WCDMA, GSM, LTE, 5G New Radio (NR), NB loT, UTRAN, WiMax, or the like.

In another example, the communication subsystem **551** may be configured to include one or more transceivers used to communicate with one or more remote transceivers of another wireless device such as user equipment according to one or more communication protocols known in the art or that may be developed, such as IEEE 802.xx, CDMA, WCDMA, GSM, LTE, 5G NR, NB loT, UTRAN, WiMax, or the like. Each transceiver may include a transmitter **553** or a receiver **555** to implement transmitter or receiver functionality, respectively, appropriate to the RAN links (e.g., frequency allocations and the like). Further, the transmitter **553** and the receiver **555** of each transceiver may share circuit components, software, or firmware, or alternatively may be implemented separately.

In the current embodiment, the communication functions of the communication subsystem **551** may include data communication, voice communication, multimedia communication, short-range communications such as Bluetooth, near-field communication, location-based communication such as the use of the global positioning system (GPS) to determine a location, another like communication function, or any combination thereof. For example, the communication subsystem **551** may include cellular communication, Wi-Fi communication, Bluetooth communication, and GPS communication. The network **543b** may encompass wired and wireless communication networks such as a local-area network (LAN), a wide-area network (WAN), a computer network, a wireless network, a telecommunications network, another like network or any combination thereof. For example, the network **543b** may be a cellular network, a Wi-Fi network, and a near-field network. The power source **513** may be configured to provide an alternating current (AC) or direct current (DC) power to components of the wireless device **500.**

In **FIG. 5****,** the storage medium **531** may be configured to include a number of physical drive units, such as a redundant array of independent disks (RAID), a floppy disk drive, a flash memory, a USB flash drive, an external hard disk drive, thumb drive, pen drive, key drive, a high-density digital versatile disc (HD-DVD) optical disc drive, an internal hard disk drive, a Blu-Ray optical disc drive, a holographic digital data storage (HDDS) optical disc drive, an external mini-dual in-line memory module (DIMM) synchronous dynamic random access memory (SDRAM), an external micro-DIMM SDRAM, a smartcard memory such as a subscriber identity module or a removable user identity (SIM/RUIM) module, other memory, or any combination thereof. The storage medium **531** may allow the wireless device **500** to access computerexecutable instructions, application programs or the like, stored on transitory or non-transitory memory media, to off-load data, or to upload data. An article of manufacture, such as one utilizing a communication system may be tangibly embodied in storage medium **531,** which may comprise a computer-readable medium.

The functionality of the methods described herein may be implemented in one of the components of the wireless device **500** or partitioned across multiple components of the wireless device **500.** Further, the functionality of the methods described herein may be implemented in any combination of hardware, software, or firmware. In one example, the communication subsystem **551** may be configured to include any of the components described herein. Further, the processor **501** may be configured to communicate with any of such components over the bus **503.** In another example, any of such components may be represented by program instructions stored in memory that when executed by the processor **501** performs the corresponding functions described herein. In another example, the functionality of any of such components may be partitioned between the processor **501** and the communication subsystem **551.** In another example, the non-computative-intensive functions of any of such components may be implemented in software or firmware and the computative-intensive functions may be implemented in hardware.

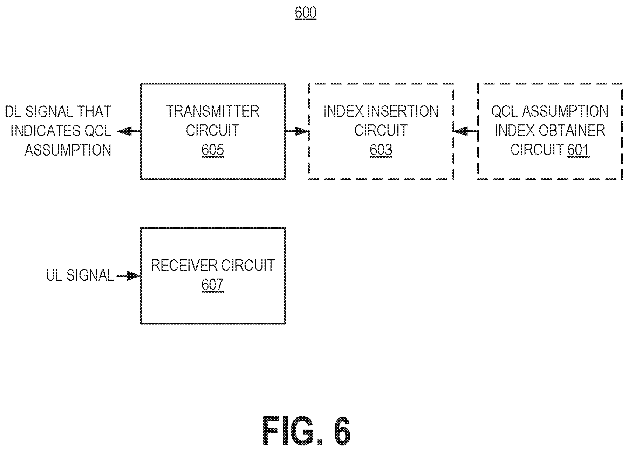

**FIG.** 6 illustrates one embodiment of a network node **600** in accordance with various aspects as described herein. In **FIG. 6****,** the network node **600** may include a QCL assumption index obtainer circuit **601,** an index insertion circuit **603,** a transmitter circuit **605,** a receiver circuit **607,** the like, or any combination thereof. The QCL assumption index obtainer index **601** may be configured to obtain an index based on a QCL assumption. The index insertion circuit **603** may be configured to insert the index into a downlink signal. The transmitter circuit **605** may be configured to transmit the downlink signal that indicates the QCL assumption. The receiver circuit **607** may be configured to receive the uplink signal that was transmitted by the wireless device using a transmitter configuration based on the QCL assumption.

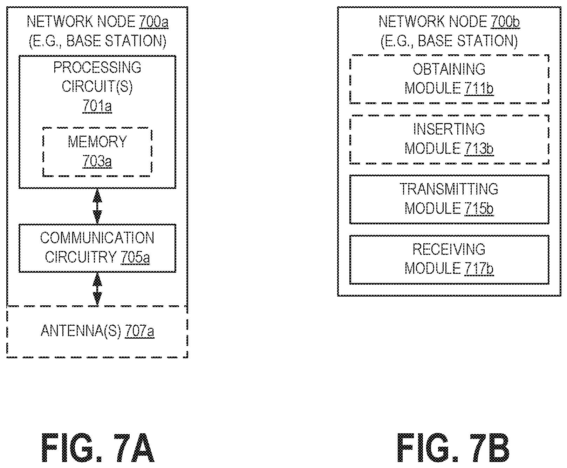

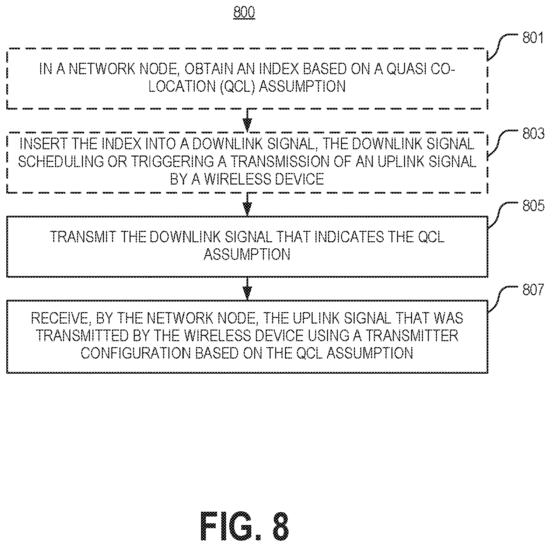

**FIGs. 7A-B** illustrate other embodiments of a network node **700a-b** in accordance with various aspects as described herein. In **FIG. 7A****,** the network node **700a** (e.g., base station) may include processing circuit(s) **701a,** radio frequency (RF) communications circuit(s) **705a,** antenna(s) **707a,** the like, or any combination thereof. The communication circuit(s) **705a** may be configured to transmit or receive information to or from one or more network nodes or one or more wireless devices via any communication technology. This communication may occur using the one or more antennas **707a** that are either internal or external to the network node **700a.** The processing circuit(s) **701a** may be configured to perform processing as described herein (e.g., the method of **FIG. 8**) such as by executing program instructions stored in memory **703a.** The processing circuit(s) **701a** in this regard may implement certain functional means, units, or modules.

In **FIG. 7B****,** the network node **700b** may implement various functional means, units, or modules (e.g., via the processing circuit(s) **701a** in **FIG. 7A** or via software code). These functional means, units, or modules (e.g., for implementing the method of **FIG. 8**) may include an obtaining unit or module 711b for obtaining an index based on a QCL assumption; an inserting unit or module **713b** for inserting the index into a downlink signal; a transmitting unit or module **715b** for transmitting the downlink signal that indicates the QCL assumption; a receiving unit or module **717b** for receiving the uplink signal that was transmitted by the wireless device using a transmitter configuration based on the QCL assumption.

**FIG. 8** illustrates one embodiment of a method **800** by a network node for indicating a transmitter configuration for a wireless device in a wireless communication system in accordance with various aspects as described herein. The network node performing this method **800** may correspond to any of the network nodes **101, 600, 700a-b** described herein. In **FIG. 8****,** the method **800** may start, for instance, at block **801** where it may include obtaining an index based on a QCL assumption. At block **803,** the method **800** may include inserting the index into a downlink signal. Further, the downlink signal may schedule or trigger a transmission of an uplink signal by a wireless device. At block **805,** the method **800** may include transmitting the downlink signal that indicates the QCL assumption. At block **807,** the method **800** may include receiving the uplink signal that was transmitted by the wireless device using a transmitter configuration based on the QCL assumption.

Additional embodiments will be further described.

The UE may be triggered to transmit PUSCH in the uplink based on a downlink control message in PDCCH (e.g., uplink grant) or a PUCCH transmission containing HARQ-ACK in response to receiving a PDSCH. It is also possible to trigger a PUCCH or PUSCH transmission containing CSI in response to a PDCCH.

When analog beamforming is used in the UE, and possibly in the gNB, the UE TX beam to use for transmitting in the uplink should be known to the gNB, so that the gNB may tune its RX beam accordingly.

In one embodiment, referred to herein as Case 1 (PDCCH without BPL index), an implied rule indicates that the UE should use the same transmit beam for transmitting an uplink response to the network as the RX beam used to receive the downlink message from the gNB that contained the scheduling of the uplink response (i.e., the PDCCH). Hence, there is no explicit signaling needed to indicate which beam the UE shall use for transmitting the uplink message.

Alternatively or additionally, the uplink transmission (e.g., PUSCH or PUCCH and its associated DMRS) is QCL (at least with respect to the spatial parameter but it may also include other parameters such as Doppler shift) on the receiver side (UE) with the DL transmission (e.g., PDCCH or PDSCH and its associated DMRS) that caused the uplink transmission.

In another embodiment, the UE should use the TX beam corresponding to the RX beam used to receive either the PDCCH or the PDSCH when transmitting the HARQ-ACK feedback. The use the PDCCH or the PDSCH as the reference may be specified or configured by higher layers (e.g., RRC signaling). In this case, the PDCCH DMRS or the PDSCH DMRS is spatially QCL at the UE with the PUCCH DMRS. For example, the UE shall use a transmit beam corresponding to a receive beam used to receive the PDSCH when transmitting the HARQ-ACK in response to the PDSCH.

Alternatively or additionally, the uplink response may be a CSI feedback or PUSCH transmission based on a downlink PDCCH in which case, the PUSCH DMRS is spatially QCL at the receiver with the PDCCH DMRS.

In one embodiment, referred to herein as Case 2 (PDCCH with BPL index), the PDCCH may sometimes contain a BPL index to indicate which BPL the UE should assume for the PDSCH that the PDCCH schedules. In this case, the UE should use the same RX beam as the associated CSI-RS that defined that BPL to receive the PDSCH. In other words, the CSI-RS associated with that BPL index is spatially QCL at the receiver with the PDSCH and PDSCH DMRS. In this case, the UE should use the same CSI-RS as was indicated by this BPL index for the spatial QCL assumption when transmitting the HARQ-ACK in PUCCH. The UE should use the same (or similar) TX beam for the PUCCH containing HARQ-ACK (and associated DMRS) as the RX beam used to receive the CSI-RS as indicated in the PDCCH.

Even if the CSI-RS associated with the BPL is changed before the uplink transmission takes place (since there is a delay of multiple slots between scheduling uplink and actual uplink transmission), the UE should use the previous (old) BPL at the scheduling instant for transmitting the uplink response (e.g. HARQ-ACK). This embodiment has the benefit that the uplink transmission is unaffected if the BPL update procedure fails or gets corrupted since already scheduled uplink transmissions rely on the "old" BPL information.

In another embodiment, the PDCCH may comprise a DCI, which includes an SRS request that triggers the UE to perform an aperiodic Sounding Reference Signal transmission. The SRS is used to sound the channel bandwidth in order to obtain information about the uplink channel and uplink channel quality in each sub-band, which enables the gNB to select the appropriate link adaption and precoding for uplink transmissions. The UE should then assume, unless otherwise indicated, that the transmit beam corresponding to the RX beam used to receive the PDCCH should be used for the SRS transmission. An exception to this case is if the gNB may want to trigger an SRS beam sweep at the UE as part of an uplink beam management procedure. The UE may then be triggered to transmit several SRSs in a number of time units, where each SRS is transmitted on a different transmit beam. The trigger of such an SRS beam sweep may be indicated in a DCI transmitted by the gNB on a PDCCH. In this case, the UE should not assume that the uplink response (i.e., the SRS beam sweep) should be spatially QCL with the downlink message that schedules the uplink response, as this would require that the SRS beam sweep be transmitted on the same UE transmit beam, which may not be beneficial.

Thus, in one embodiment, the DCI triggering such an SRS beam sweep may comprise an explicit indicator, indicating that the implicit spatial QCL assumption between the downlink scheduling message and the uplink response is overridden, enabling the UE to freely choose its transmit beams in the uplink response.

In another embodiment, the implicit spatial QCL assumption between the downlink scheduling message and the uplink response is only applicable when the uplink response consists of a transmission of a single physical signal (e.g., a single SRS, PUSCH or PUCCH). Thus, when the downlink scheduling message triggers more than one uplink response (e.g., when multiple transmissions of SRSs associated with an SRS beam sweep are triggered) the implicit QCL assumption is not applicable.

In another embodiment, one BPL exists between a transmission/reception point (TRP) and a UE. Further, the TRP has scheduled a PUCCH in a certain number of slots (e.g., five slots) from the current slot. Also, the TRP determines that one or more transmissions associated with the BPL is degrading due to blocking (e.g., monitoring UL SRS transmissions). The TRP then initiates a BPL update (i.e., to find more suitable TRP/UE beams for the BPL) to update the BPL with a better beam(s). Also, the previous (old) BPL that was used for scheduling the PUCCH is blocked. Since the transmission of the PUCCH uses the beam associated with the previous BPL, this transmission is blocked and hence, cannot be received by the TRP. To resolve this, the TRP schedules a transmission of a new PUCCH based on the updated BPL. In this case, even if the initial transmission of the PUCCH is lost due to blocking associated with the previous BPL, the transmission of the new PUCCH associated with the updated BPL will be received, which will reduce the risk of BPL failure.

### BEAM MANAGEMENT:

In NR, different system requirements associated with QCL may be applied. In a first example, an indication of QCL between the antenna ports of two CSI-RS resources is supported. By default, no QCL may be assumed between antenna ports of two CSI-RS resources. Partial QCL parameters (e.g., only spatial QCL parameter at UE side) may be considered. For downlink, NR supports CSI-RS reception with and without beam-related indication. When a beam-related indication is provided, information pertaining to UE-side beamforming/receiving procedure used for CSI-RS-based measurement may be indicated through QCL to UE. Further, QCL information includes spatial parameter(s) for UE-side reception of CSI-RS ports.

In a second example, NR-PDCCH transmission supports robustness against beam pair link blocking. A UE can be configured to monitor NR-PDCCH on *M* beam pair links simultaneously, where M ≥ 1. The maximum value of *M* may depend at least on UE capability. Also, a UE may choose at least one beam out of *M* for NR-PDCCH reception. A UE can be configured to monitor NR-PDCCH on different beam pair link(s) in different NR-PDCCH OFDM symbols. NR-PDCCH on one beam pair link may be monitored with shorter duty cycle than other beam pair link(s). This configuration may apply to scenarios where a UE may not have multiple RF chains. Parameters related to UE Rx beam setting for monitoring NR-PDCCH on multiple beam pair links are configured by higher layer signaling or Medium Access Control (MAC) Control Element (CE) or considered in the search space design.

In a third example, for reception of a unicast DL data channel, an indication of a spatial QCL assumption between DL RS antenna port(s) and DMRS antenna port(s) of DL data channel is supported. Information indicating the RS antenna port(s) is indicated via Downlink Control Information (DCI) (downlink grants). The information indicates the RS antenna port(s) which is QCL'ed with DMRS antenna port(s). Further, the RS port/resource ID may be implicitly or explicitly indicated. In one example, the indication is assumed only for the scheduled PDSCH or until next indication. Further, a scheduling/beam switch offset may be included. Also, a beam indication for receiving fall back unicast PDSCH may be included. In addition, the related signaling may be UE-specific.

### Multiple beam pair link (BPL) Handling:

The establishment and maintenance of multiple BPLs has several purposes. One purpose is for achieving PDCCH robustness, whereby the gNB can transmit PDCCH on multiple beam pair links simultaneously or in TDM fashion (e.g., the second example above). Another use is to support non-coherent joint transmission (JT) or distributed multiple input, multiple output (D-MIMO), where different BPLs potentially carry different PDSCHs. In either case, a beam-related indication is needed to assist UE-side beamforming (i.e., UE Rx beam selection).

Since the primary tool for maintaining (updating) beam pair links is UE measurement of multiple beam formed CSI-RS resources and subsequent feedback of a resource selection, a beam pair link is by nature associated with a previously transmitted CSI-RS resource. It is important to note that the terminology beam pair link (BPL) is a useful construct for discussion; however, the term itself may not appear in industry standards specifications. If not, then the salient feature that could be captured is that a BPL is defined as a link that has been established between the gNB and the UE, where the UE has selected and reported to the eNB at least one preferred out of a number of CSI-RS resources, transmitted with different transmitter configurations (Tx beams) and where a preferred UE receiver configuration (Rx beam) has been determined by the UE based on the selected CSI-RS resource.

Based on this, it follows automatically that a beam-related indication is a reference to a previously transmitted CSI-RS resource on which the UE has performed a measurement. If the previously transmitted CSI-RS resource is indicated to the UE in association with a current DL transmission (e.g., PDSCH, PDCCH, or CSI-RS), then the UE may use that information to assist in UE-side beamforming. An equivalent statement is that the current PDSCH DMRS, PDCCH DMRS, or CSI-RS transmission is spatially QCL at the UE RX with the previously transmitted CSI-RS resource referred to in the beam-related indication.

This clearly shows that the reference to the previously transmitted CSI-RS resource is precisely a QCL indication, consistent with the above first example.

A problem is then how to refer to a previously transmitted CSI-RS resource. One approach could be that each CSI-RS resource has an identifier (e.g., a timestamp in terms of radio frame number, slot number, and OFDM symbol number that can be used to uniquely identify the CSI-RS resource). However, such unique resource identification can consume a large amount of overhead. This is undesirable considering that the beam-related indication can be dynamically signaled (e.g., through DCI or MAC-CE). Another approach could be that a CSI-RS resource is always associated with a unique Tx beam in the network, and the beam-related indication to the UE uses that beam number. However, the number of beams could be a very large number, again leading to an overhead problem.

Rather than relying on absolute timestamps or fixed beam numbers, an alternative approach is to use a relative CSI-RS resource indicator - or proxy - to refer to a previously transmitted CSI-RS. Since the number of maintained BPLs could be quite small, the proxy indicator could have quite low overhead (e.g., two bits) allowing for the maintenance of up to four BPLs. One can think of the proxy as a "BPL tag." Associated with each BPL tag, is (1) the Tx configuration (Tx beam) corresponding to the UE-selected CSI-RS resource, and (2) the preferred UE receiver configuration (Rx beam) associated with the selected CSI-RS resource. It is important to realize that all that is necessary is for the gNB to remember the Tx configuration (Tx beam) associated with the BPL tag and for the UE to remember the Rx configuration (Rx beam) associated with the BPL tag. The gNB does not have to know the UE Rx beam, nor does the UE need to know the gNB Tx beam. No absolute beam indices are required. That way, in the future, if a BPL tag is signaled to the UE along with a DL signal transmission (e.g., PDSCH or CSI-RS), the UE can retrieve the Rx configuration that it used to receive the previously transmitted CSI-RS resource from its memory. This indication assists with UE-side beamforming to effectively receive the DL signal transmission.

To support downlink beam management, three procedures, the P1, P2 and P3 procedures, may be applied. In the P2 procedure, the transmitter sends the same reference signal multiple times (e.g., in different OFDM symbols) and each time in a different beam direction (e.g., different multi-antenna precoding weights). This is called a transmitter beam-sweep. The UE keep the RX beam unchanged during this beam-sweep and the UE can then report which one of these multiple beams it prefers. In the P3 procedure, the transmitter sends the same reference signal multiple times (e.g., in different OFDM symbols) and each time in the same beam direction. The receiver may then change its receiver beam direction (e.g., different multi-antenna receiver weights) in each occasion and hence, evaluate which is the preferred receive beam for that particular transmit beam. Lastly, the P1 procedure is a combination of the P2 and P3 procedures, where both the transmitter and receiver are allowed to alter their beams during the beam sweep.

One important use case for BPL tags is during the update (refinement) of a particular BPL, say the one with tag #b. As already discussed, this BPL with tag #b is associated with a CSI-RS resource on which the UE previously measured. The BPL can be updated, for example, with the P2 procedure. In this case, the gNB can trigger the UE to measure and report on an aperiodic CSI-RS beam sweep. The DCI message carrying the measurement and reporting trigger, should also include the BPL tag #b. With this indication, the UE look-up from memory what Rx configuration (Rx beam) is currently associated with tag #b, and it is free to use this information to assist in receiving the transmitted CSI-RS resources. The signaling of tag #b is equivalent to a QCL indication that says that the currently transmitted CSI-RS resources are spatially QCL at the UE RX with the previously transmitted CSI-RS resource associated with tag #b. As previously mentioned, to support up to four BPLs (e.g., b ∈ {0,1,2,3}), only two bits are needed in the DCI message, which uniquely indicates the previously transmitted CSI-RS resource.

The associated aperiodic CSI report will indicate a preferred CSI-RS resource through a Contention Resolution Identifier (CRI). The CSI-RS resource corresponding to this CRI is now the new, updated CSI-RS associated with tag #b. The gNB stores the Tx configuration (Tx beam) associated with tag #b in memory for future use. This could be used, for example, to ensure that a future aperiodic CSI-RS beam sweep includes the "old" Tx beam to be used as a reference against which the UE will compare potential new Tx beams.

Alternatively, the BPL with tag #b can be updated with a P3 procedure. In this case, the gNB can trigger the UE to measure and report on a number of CSI-RS resources for which the Tx configuration (Tx beam) is held fixed. The fixed Tx beam is the one already associated with tag #b. Again, the DCI message carrying the measurement trigger should include the BPL tag #b. However, the UE also needs to be informed that it should assume that the currently transmitted CSI-RS resources are not spatially QCL at the UE RX with the previously transmitted CSI-RS resource associated with tag #b. This could be done through a separate (one bit) flag to inform the UE whether or not this is a beam sweep using the P3 procedure. This flag may be signaled to the UE dynamically or configured through higher layers (e.g., within the CSI framework). Either way, when this flag is set to FALSE, the UE should not use the Rx configuration (Rx beam) that it used to receive the previous CSI-RS resource, since the purpose of the P3 beam sweep is for the UE to try new Rx beams, not hold its Rx beam fixed. Once the preferred Rx beam is found, the UE should remember the associated Rx configuration and associate this with tag #b. Since the Tx configuration (Tx beam) remains fixed, there is no need to associate a new CSI-RS with tag #b, nor is there a need for the UE to report CRI. However, the gNB can still configure the UE to report other CSI components (e.g., Channel Quality Indicator (CQI), Pre-coding Matrix Indicator (PMI), Rank Index (RI)) to support link adaptation.

The following two embodiments support beam management procedures to establish and maintain multiple BPLs between the gNB and a UE. By triggering multiple beam sweeps with different BPL tags, the reported measurements for each BPL allows the gNB to associate a UE-preferred gNB Tx beam for each BPL tag and allows the UE to associate a preferred UE Rx beam for each BPL tag. Hence, up to four BPLs can be established by the use of a two bit BPL tag.

In one embodiment, in an aperiodic CSI-RS beam sweep, to be able to reference a previously transmitted CSI-RS resource for spatial QCL purposes, the measurement and reporting trigger (e.g., in DCI) contains a BPL tag using two bits.

In another embodiment, in an aperiodic transmission of multiple CSI-RS resources in which the gNB keeps its Tx beam constant (e.g., P3 procedure), the UE should receive a one bit flag set to FALSE to indicate that the CSI-RS resources are not spatially QCL with a previously transmitted CSI-RS resource. This flag may be signaled dynamically, or if it is configured by higher layers, then this flag may be signaled as part of the CSI framework.

In parallel to the procedures for establishing and maintaining multiple BPLs, the UE can be configured with at least one BPL for PDCCH monitoring. The BPL the UE shall use for receiving PDCCH is configured by indicating the associated two bit BPL tag (e.g., through higher layer signaling). Alternatively, it could be specified that in the case of PDCCH monitoring of only a single BPL, that BPL tag 0 is always used. According to the second example above, *M* BPLs can be configured for PDCCH monitoring, either simultaneously or in a TDM fashion. In this case, the UE should be configured with *M* two bit BPL tags.

In one embodiment, a UE can be configured to monitor NR-PDCCH on *M* beam pair links, where each beam pair link is indicated by a BPL tag using two bits.

Another use case for BPL tags is for data transmission (e.g., different PDSCHs from different TRPs; or non-coherent JT or D-MIMO, where different BPLs potentially carry different PDSCHs). A BPL tag included with the scheduling DCI assists the UE-side beamforming for receiving the corresponding PDSCH.

In one embodiment, in a PDSCH transmission, the associated DCI contains a BPL tag using two bits that indicates that the DMRS for PDSCH is spatially QCL with the previously transmitted CSI-RS resource associated with the BPL tag.

From the above, beam management consists of three rather independent processes:
(1) establishment and maintenance of multiple BPLs, each identified with a two bit BPL tag;
(2) the BPL(s) to use for control channel; and
(3) the BPL(s) used for data channel.

While the BPLs are considered independent, when a BPL TX and RX beam is updated in the measurement process, it reflects the beams that can be used for the control channels and the data channels that use the BPL as well.

### Group-Based Beam Reporting:

Another issue is related to set/group based reporting, which can be useful for UEs that are able to support simultaneous reception on two or more beam pair links (BPLs). This UE capability can be a result of a UE equipped with two or more antenna panels with separate receive chain(s). One working assumption is that NR should support at least one of two alternatives for such reporting: set-based reporting and/or group-based reporting.

Another issue is related to overhead. Reporting beam-related information on multiple sets/groups of beams of course incurs extra feedback overhead compared to single-beam reporting. For instance, set and group-based reporting can offer the gNB the same flexibility in selecting amongst Tx beams that may be received simultaneously at the UE; however, for equal flexibility, the feedback overhead for set-based reporting can be larger than group-based reporting.

Another overhead consideration is beam-related indication in the downlink (e.g., QCL indication to support UE-side beamforming when beams from different sets are groups are selected for transmission). Like for the uplink overhead, there may be differences in overhead between set and group-based reporting when the gNB would like to select multiple beams for transmission within a set or across groups.

### QCL FOR DL RS:

With respect to QCL for DL RS, different system requirements associated with QCL may be applied. In a first example, DMRS ports grouping may be supported, with DMRS ports within one group being QCL'ed, and DMRS ports in different groups being non-QCL'ed. DMRS may be grouped according to continuous wave (CW) analog beams, or the like. Further, the QCL indication may be signaled using, for instance, radio resource control (RRC), MAC CE, DCI, or the like. Also, a DMRS may be used to estimate of large scale properties of a channel such as Doppler shift, Doppler spread, delay spread, or the like. In addition, QCL supports functionalities such as beam management (e.g., spatial parameters), frequency/timing offset estimation (e.g., Doppler/delay parameters), radio resource management (RRM) (e.g., average gain). Moreover, if the UE scheduled more than one PDSCH in a slot (this is the typical multi-TRP case using e.g., non-coherent JT), then the DMRS in the first and second PDSCH may not be QCL'ed.

In a second example, an indication of a QCL assumption associated with a subset of QCL parameters between antenna ports of two RS resources may be supported based on various alternatives. These alternatives may include at least one of (1) which of the subset of QCL parameters are configured by gNB, (2) which QCL type is configured by gNB where multiple QCL types are pre-defined, and (3) which QCL types are pre-defined.

In a third example, the UE is not indicated by default. Accordingly, antenna port(s) transmitted on different CCs are not assumed to be QCL'ed.

In a fourth example, an indication of QCL assumption for CSI-RS may be associated with an SS block such as (e.g., SSS, PBCH DMRS (if defined)), RS for fine time-frequency tracking (if it's not CSI-RS), or the like.

In one embodiment, a DMRS belonging to different PDSCH scheduling in the same slot are by default not QCL. Hence, the DMRS in one PDSCH is the first group and DMRS in the other PDSCH is the second group.

When it comes to non-QCL DMRS groups within a single PDSCH, the intended use case would be the multi-TRP transmission for the general QCL parameter case or the multibeam transmission from a single TRP for the spatial QCL case. The latter then holds for UEs with analog beamforming (due to the use of spatial QCL), which has the capability to receive more than one beam at the same time. As a baseline, dual PDSCH scheduling may be used for this case.

gNB implementation of very wide bandwidths compared to LTE may use independent calibration circuits, clocks and oscillators per CC. Hence, beam management procedures and thus spatial QCL per carrier may be operated independently.

In one embodiment, beam management and thus sQCL assumptions operate independently per component carrier.

### QCL between SS block, RAR and PDCCH DMRS:

This section focuses on spatial QCL, to aid the beam management for millimeter (mm)-wave operation, while there is a more general QCL discussion needed for other QCL parameters such as average delay, average gain, Doppler, or the like, and whether to link CSI-RS to the RS(s) used for fine channel tracking using QCL. The UE will detect an SS block which may have sector coverage (in case of a single SS block per TRP) or rather wide beam width (in case of a few SS blocks per TRP). Which SS block the UE has detected is known through the initial access procedure (i.e., related to the used PRACH preamble resource). The SS block beams are not expected to be very narrow in beam width at least not in the normal case, since it has problems with, for example, overhead (although a large number of SS blocks may be allowed in specs to support extreme coverage cases where overhead is not the largest concern).

A self-contained random access response (RAR) is used, and the RAR may be spatially QCL at the UE with the detected SS block if indicated in the PBCH. It is reasonable to transmit initial PDCCH by default in the same beam as the detected RAR; and thus, also the SS block, if indicated by PBCH. The default PDCCH allows the gNB to configure the UE with, for example, CSI-RS for beam management.

In one embodiment, the UE may assume by default that the PDCCH DMRS is spatial QCL with the detected SS block if indicated in the broadcasted PBCH. This default spatial QCL may be overridden by UE specific and dedicated RRC signaling.

For PDSCH and possibly also PDCCH on the other hand, narrowest possible beams may be used and those beams may be selected and managed by beam management using dedicated CSI-RS measurements. Hence, in this case, the PDCCH and PDSCH may be configured to be spatially QCL with the CSI-RS resource indicated in the beam management procedure (beam indication). Depending on the channel to receive, the UE may utilize different spatial QCL assumptions, for example, PDCCH with the detected and preferred SS block (SS-QCL), PDCCH with a configured CSI-RS (CSI-RS-QCL), or the like.

### QCL between CSI-RS resources:

QCL between antenna ports of two CSI-RS resources may be supported. Further, the dynamic indication of gNB and UE side partial QCL assumptions between the CSI-RS beam sweeps P1 and P2/P3 may be supported. Hence, when triggering an aperiodic CSI-RS beam sweep and associated aperiodic CSI report containing CRI, the triggering DCI may contain a reference to a previously transmitted CSI-RS resource so that the UE may utilize this information to tune its RX beam.

Moreover, a proxy such as the beam pair link (BPL) identity may be used when referring to a previous CSI-RS resource. Hence, when triggering a P2/P3, then a BPL index is included in the triggering DCI and that BPL is in turn linked to a certain CSI-RS resource that the UE has measured and reported on at a previous point in time.

In one embodiment, the dynamic indication in DCI of spatial QCL assumptions between CSI-RS resources when triggering a CSI-RS measurement for beam management is supported.

### QCL FOR UL RS:

With respect to QCL for UL RS, different system requirements may be applied. NR may support with and without a downlink indication to derive QCL assumption for assisting UE-side beamforming for downlink control channel reception. This indication may be signaled using, for instance, DCI, MAC CE, RRC, or the like. Further, a beam-related indication may be used for DL control and data channels. Further, for downlink, NR may support beam management with and without beam-related indications. When a beam-related indication is provided, information pertaining to UE-side beamforming/receiving procedure used for data reception may be indicated through QCL to UE. Tx/Rx beam correspondence at TRP and UE may be defined. In one example, Tx/Rx beam correspondence at TRP holds if at least one of the following is satisfied: TRP is able to determine a TRP Rx beam for the uplink reception based on UE's downlink measurement on TRP's one or more Tx beams, and TRP is able to determine a TRP Tx beam for the downlink transmission based on TRP's uplink measurement on TRP's one or more Rx beams. In another example, Tx/Rx beam correspondence at UE holds if at least one of the following is satisfied: UE is able to determine a UE Tx beam for the uplink transmission based on UE's downlink measurement on UE's one or more Rx beams, and UE is able to determine a UE Rx beam for the downlink reception based on TRP's indication based on uplink measurement on UE's one or more Tx beams.

For non-codebook based UL transmission, frequency selective precoding for Cyclic Prefix (CP)-OFDM is supported when the number of transmission ports is greater than a predetermined number such as two ports, three ports, four ports, or the like. Further, the indication of DL measurement RS is supported to allow the UE to calculate candidate precoder. Also, the mechanisms for UL precoder determination may be based on precoded SRS, non-precoded SRS, hybrid precoded, non-precoded SRS, or the like.

For nodes that have reciprocity-calibrated transmitter and receiver chains, it may be known when a signal that will be received is the reciprocal response to another signal that was transmitted earlier or vice versa. That is, assuming a node with analog beamforming is transmitting an SRS or a PRACH with some analog beam, when receiving a response to the sounding or PRACH, the UE may expect the response to arrive through the reciprocal channel, for which the receiver beam could favorably be the same beam as was used for the reciprocal transmission. Likewise, the PRACH transmission may be a response to a received SS block or a mobility RS. Hence, the spatial QCL framework could be extended to also cover the use case of reciprocal responses for analog beamforming by defining the received signal to be reciprocally quasi co-located with the transmitted signal or vice versa.

In one embodiment, reciprocal spatial quasi co-location is supported at a node, where a signal received at a node and a transmitted signal from the same node, are spatially QCL.

In particular, when beam correspondence holds at the UE, which likely may be a default operation, then the UE may be signaled to transmit precoded SRS or a precoded PUSCH or PUCCH in the same direction as it has received a certain CSI-RS.

In one embodiment, reciprocal spatial QCL is supported at the UE between the reception of an SS block or a CSI-RS resource and a transmitted signal such as an SRS resource, PUCCH, or PUSCH.

This will ensure that a gNB knows the receive spatial correlation of a signal transmitted from the UE; thus, the gNB can adapt its receiver accordingly. For non-codebook based UL transmission of data (i.e., where precoding is decided by the UE), the indication of DL measurement RS may be supported so that the UE may calculate the candidate precoder.

In one embodiment, in UL transmission scheme B, a DL indication defines which CSI-RS is reciprocally and spatially QCL with the scheduled PUSCH and PUCCH DMRS. This signaling may be at least included in the DCI carrying the UL grant. UL transmission scheme B is channel reciprocity-based uplink. Further, the UE may determine the precoder on its own. UL transmission scheme B may also be referred to as a non-codebook uplink transmission scheme.

Moreover, when there is a problem with uplink interference where many UE transmit uplink data and sounding at the same time and the network is dense (e.g., many gNBs in a small area), it is beneficial to reduce uplink interference by using uplink precoding based on channel reciprocity.

In one embodiment, suppression of uplink interference is supported towards victim gNB using precoded transmitted signals from the UE, by defining that the transmission is not spatially QCL (in reciprocal sense) with the reception of a CSI-RS resource transmitted from a victim TRP or gNB. The transmitted signal may be, for example, PUSCH, PUCCH, SRS, or the like. Again, additional explicit signaling may be needed to indicate which CSI-RS resource are victim and which are desired.

**ABBREVIATIONS:**

| Abbreviation | Explanation |
|---|---|
| 3GPP | 3rd Generation Partnership Project |
| 5G | 5th Generation mobile networks or wireless systems |
| BS | Base Station |
| CE | Control Element |
| CP | Cyclic Prefix |
| CRC | Cyclic Redundancy Check |
| CRS | Cell Specific Reference Signal |
| CSI | Channel State Information |
| CSI-RS | Channel state information reference signal |
| CSS | Common Search Space |
| DL | Downlink |
| DMRS | Demodulation reference signal |
| eNB | Evolved Node B (i.e., base station) |
| E-UTRA | Evolved Universal Terrestrial Radio Access |
| E-UTRAN | Evolved Universal Terrestrial Radio Access Network |
| DFT | Discrete Fourier Transform |
| FDD | Frequency Division Duplex |
| IFFT | Inverse Fast Fourier Transform |
| IoT | Internet of Things |
| LTE | Long Term Evolution |
| MAC | Medium Access Control |
| MIMO | Multiple Input Multiple Output |
| MSR | Multi-Standard Radio |
| MTC | Machine-Type Communication |
| NB | Narrow-Band |
| NB-IoT | Narrow-Band Internet of Things |
| NB-LTE | Narrow-Band LTE (e.g., 180 KHz bandwidth) |
| NB-PBCH | NB-IoT Physical Broadcast Channel |
| NB-PSS | NB-IoT Primary Synchronization Sequence |
| NB-SSS | NB-IoT Secondary Synchronization Sequence |
| OFDM | Orthogonal Frequency Division Modulation |
| OFDMA | Orthogonal Frequency Division Modulation Access |
| PA | Power Amplifier |
| PAPR | Peak-to-Average Power Ratio |
| PBCH | Physical Broadcast Channel |
| PDCCH | Physical Data Control Channel |
| PDCP | Packet Data Convergence Protocol (PDCP) |
| PDU | Protocol Data Unit |
| PRACH | Physical Random Access Channel |
| PRB | Physical Resource Block |
| PSD | Power Spectral Density |
| PSS | Primary Synchronization Sequence |
| PUSCH | Physical Uplink Shared Channel |
| RACH | Random Access Channel |
| RAT | Radio Access Technology |
| RBR | Recommended Bit Rate |
| RF | Radio Frequency |
| RRC | Radio Resource Control |
| RS | Reference signal |
| RX | Receiver |
| SoC | System-on-a-Chip |
| SC-FDMA | Single-Carrier, Frequency Division Multiple Access |
| SFBC | Space Frequency Block Coding |
| SIB | System Information Block |
| SIM | Subscriber Identity Module or Subscriber Identification Module |
| SNR | Signal to Noise Ratio |
| SRS | Sounding Reference Signal |
| SS | Synchronization Signal |
| SSS | Secondary Synchronization Sequence |
| TDD | Time Division Duplex |
| TRP | Transmission/Reception Point |
| TSS | Tertiary synchronization signal or Time synchronization signal |
| TX | Transmitter |
| UE | User Equipment |
| UL | Uplink |
| USS | UE-specific Search Space |
| WB-LTE | Wideband LTE (i.e., corresponds to legacy LTE) |
| ZC | Zadoff-Chu algorithm |

The various aspects described herein may be implemented using standard programming or engineering techniques to produce software, firmware, hardware (e.g., circuits), or any combination thereof to control a computing device to implement the disclosed subject matter. It will be appreciated that some embodiments may be comprised of one or more generic or specialized processors such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the methods, devices and systems described herein. Alternatively, some or all functions could be implemented by a state machine that has no stored program instructions, or in one or more application specific integrated circuits (ASICs), in which each function or some combinations of certain of the functions are implemented as custom logic circuits. Of course, a combination of the two approaches may be used. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The term "article of manufacture" as used herein is intended to encompass a computer program accessible from any computing device, carrier, or media. For example, a computer-readable medium may include: a magnetic storage device such as a hard disk, a floppy disk or a magnetic strip; an optical disk such as a compact disk (CD) or digital versatile disk (DVD); a smart card; and a flash memory device such as a card, stick or key drive. Additionally, it should be appreciated that a carrier wave may be employed to carry computer-readable electronic data including those used in transmitting and receiving electronic data such as electronic mail (e-mail) or in accessing a computer network such as the Internet or a local area network (LAN). Of course, a person of ordinary skill in the art will recognize many modifications may be made to this configuration without departing from the scope of the subject matter of this disclosure.

Throughout the specification and the embodiments, the following terms take at least the meanings explicitly associated herein, unless the context clearly dictates otherwise. Relational terms such as "first" and "second," and the like may be used solely to distinguish one entity or action from another entity or action without necessarily requiring or implying any actual such relationship or order between such entities or actions. The term "or" is intended to mean an inclusive "or" unless specified otherwise or clear from the context to be directed to an exclusive form. Further, the terms "a," "an," and "the" are intended to mean one or more unless specified otherwise or clear from the context to be directed to a singular form. The term "include" and its various forms are intended to mean including but not limited to. References to "one embodiment," "an embodiment," "example embodiment," "various embodiments," and other like terms indicate that the embodiments of the disclosed technology so described may include a particular function, feature, structure, or characteristic, but not every embodiment necessarily includes the particular function, feature, structure, or characteristic. Further, repeated use of the phrase "in one embodiment" does not necessarily refer to the same embodiment, although it may. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. A device or structure that is "configured" in a certain way is configured in at least that way, but may also be configured in ways that are not listed.

## Claims

1. A method performed by a wireless device (105, 200, 300a-b, 500) in a wireless communications system (100), comprising:
receiving (401) a downlink signal on a physical downlink control channel, PDCCH, using a receive beam, wherein the downlink signal indicates an implicit quasi co-location, QCL, assumption, and wherein the downlink signal schedules or triggers a transmission of an uplink signal (113); and
transmitting (411), by the wireless device, the uplink signal using a transmit beam corresponding to the receive beam in accordance with the implicit QCL assumption, wherein the uplink signal is channel state information, CSI, feedback on a physical uplink shared channel, PUSCH, or a physical uplink control channel, PUCCH.

2. The method of claim 1, wherein the transmission of the uplink signal and a reception of the downlink signal represent a beam pair link, BPL.

3. The method of any of claims 1-2, wherein the transmission of the uplink signal is spatially quasi co-located, QCL, with a reception of the downlink signal.

4. A wireless device (105, 200, 300a-b, 500) configured to:
receive (401) a downlink signal on a physical downlink control channel, PDCCH, using a receive beam, wherein the downlink signal indicates an implicit quasi co-location, QCL, assumption, and wherein the downlink signal schedules or triggers a transmission of an uplink signal (113); and
transmit (411), by the wireless device, the uplink signal using a transmit beam corresponding to the receive beam in accordance with the implicit QCL assumption, wherein the uplink signal is channel state information, CSI, feedback on a physical uplink shared channel, PUSCH, or a physical uplink control channel, PUCCH.

5. A computer readable storage medium containing a computer program, comprising instructions which, when executed on at least one processor of a wireless device, cause the wireless device to carry out the method according to any of claims 1-3.

## Patentansprüche

1. Verfahren, das von einer drahtlosen Vorrichtung (105, 200, 300a-b, 500) in einem drahtlosen Kommunikationssystem (100) durchgeführt wird und Folgendes umfasst:
Empfangen (401) eines Downlink-Signals auf einem physikalischen Downlink-Steuerkanal, PDCCH, unter Verwendung eines Empfangsstrahls, wobei das Downlink-Signal eine implizite Annahme einer Quasi-Ortsgleichheit, QCL, anzeigt und wobei das Downlink-Signal ein Senden eines Uplink-Signals (113) disponiert oder auslöst; und
Senden (411) des Uplink-Signals durch die drahtlose Vorrichtung unter Verwendung eines Sendestrahls, der dem Empfangsstrahl entspricht, gemäß der impliziten QCL-Annahme, wobei das Uplink-Signal eine Rückmeldung von Kanalzustandsinformationen, CSI, auf einem gemeinsamen physikalischen Uplink-Kanal, PUSCH, oder einem physikalischen Uplink-Steuerkanal, PUCCH, ist.

2. Verfahren nach Anspruch 1, wobei das Senden des Uplink-Signals und ein Empfangen des Downlink-Signals eine Strahlpaarverbindung, BPL, darstellen.

3. Verfahren nach einem der Ansprüche 1-2, wobei das Senden des Uplink-Signals räumlich quasi ortsgleich, QCL, mit einem Empfangen des Downlink-Signals ist.

4. Drahtlose Vorrichtung (105, 200, 300a-b, 500), ausgelegt zu Folgendem:
Empfangen (401) eines Downlink-Signals auf einem physikalischen Downlink-Steuerkanal, PDCCH, unter Verwendung eines Empfangsstrahls, wobei das Downlink-Signal eine implizite Annahme einer Quasi-Ortsgleichheit, QCL, anzeigt und wobei das Downlink-Signal einen Senden eines Uplink-Signals (113) disponiert oder auslöst; und
Senden (411) des Uplink-Signals durch die drahtlose Vorrichtung unter Verwendung eines Sendestrahls, der dem Empfangsstrahl entspricht, gemäß der impliziten QCL-Annahme, wobei das Uplink-Signal eine Rückmeldung von Kanalzustandsinformationen, CSI, auf einem gemeinsamen physikalischen Uplink-Kanal, PUSCH, oder einem physikalischen Uplink-Steuerkanal, PUCCH, ist.

5. Computerlesbares Speichermedium, das ein Computerprogramm enthält, das Anweisungen umfasst, die bei Ausführung auf mindestens einem Prozessor einer drahtlosen Vorrichtung die drahtlose Vorrichtung zum Durchführen des Verfahrens nach einem der Ansprüche 1-3 veranlassen.

## Revendications

1. Procédé réalisé par un dispositif sans fil (105, 200, 300a-b, 500) dans un système de communication sans fil (100), comprenant :
la réception (401) d'un signal de liaison descendante sur un canal de commande de liaison descendante physique, PDCCH, à l'aide d'un faisceau de réception, dans lequel le signal de liaison descendante indique un postulat de quasi colocalisation, QCL, implicite, et dans lequel le signal de liaison descendante planifie ou déclenche une transmission d'un signal de liaison montante (113) ; et
la transmission (411), par le dispositif sans fil, du signal de liaison montante à l'aide d'un faisceau de transmission correspondant au faisceau de réception conformément au postulat de QCL implicite, dans lequel le signal de liaison montante est une rétroaction d'informations d'état de canal, CSI, sur un canal partagé de liaison montante physique, PUSCH, ou un canal de commande de liaison montante physique, PUCCH.

2. Procédé selon la revendication 1, dans lequel la transmission du signal de liaison montante et une réception du signal de liaison descendante représentent une liaison de paire de faisceaux, BPL.

3. Procédé selon l'une quelconque des revendications 1 et 2, dans lequel la transmission du signal de liaison montante est quasi colocalisée, QCL, spatialement avec une réception du signal de liaison descendante.

4. Dispositif sans fil (105, 200, 300a-b, 500) configuré pour :
recevoir (401) un signal de liaison descendante sur un canal de commande de liaison descendante physique, PDCCH, à l'aide d'un faisceau de réception, dans lequel le signal de liaison descendante indique un postulat de quasi colocalisation, QCL, implicite, et dans lequel le signal de liaison descendante planifie ou déclenche une transmission d'un signal de liaison montante (113) ; et
transmettre (411), par le dispositif sans fil, le signal de liaison montante à l'aide d'un faisceau de transmission correspondant au faisceau de réception conformément au postulat de QCL implicite, dans lequel le signal de liaison montante est une rétroaction d'informations d'état de canal, CSI, sur un canal partagé de liaison montante physique, PUSCH, ou un canal de commande de liaison montante physique, PUCCH.

5. Support de stockage lisible par ordinateur contenant un programme informatique, comprenant des instructions qui, lorsqu'elles sont exécutées sur au moins un processeur d'un dispositif sans fil, amènent le dispositif sans fil à réaliser le procédé selon l'une quelconque des revendications 1 à **3.**
